(19)

**Europäisches Patentamt**
**European Patent Office**
**Office européen des brevets**

(11) **EP 4 001 952 A1**

(12) **EUROPEAN PATENT APPLICATION**

(43) Date of publication:
**25.05.2022 Bulletin 2022/21**

(21) Application number: **20275170.7**

(22) Date of filing: **19.11.2020**

(51) International Patent Classification (IPC):
**G01S 5/16** (2006.01)

(52) Cooperative Patent Classification (CPC):
**G01S 5/163**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **BAE SYSTEMS plc**
**London SW1Y 5AD (GB)**

(72) Inventor: **The designation of the inventor has not yet been filed**

(74) Representative: **BAE SYSTEMS plc**
**Group IP Department**
**Warwick House**
**P.O. Box 87**
**Farnborough Aerospace Centre**
**Farnborough Hampshire GU14 6YU (GB)**

(54) **METHOD FOR OPERATING A TRACKING SYSTEM AND TRACKING SYSTEM**

(57)     A method for determining a position of an object in a platform frame of reference is disclosed. The method comprises determining a first line of sight vector (250) and a second line of sight vector (260) in a first frame of reference from a third point (230) to first and second points (210, 220), wherein the second line of sight vector is related to the first line of sight vector according to the determined position of the second point relative to the determined position of the first point, the first point and second point are fixed in position relative to each other; receiving information defining the position of each of the two points relative to each other in a second frame of reference; receiving information defining an orientation of the second first frame of reference relative to the first frame of reference, thereby to determine the position of the object in the platform frame of reference.

Figure 2

**Description**

Field of the invention

The present invention relates to a method for operating a tracking system, in particular to determine the position of an object, and to a tracking system.

Background

In a known optical helmet tracker system for use in an aircraft, one or more emitters are positioned in a known configuration on an outer shell of a helmet, to be energised in a controlled but rapid sequence. A camera is positioned at a known location in the aircraft with a view of the helmet such that when emitters are energised they may be detected in images captured by the camera. The relative positions of at least four different emitters in the generated images may be determined and, given the known relative positions of the emitters on the helmet, used to calculate the position and orientation of the helmet in an aircraft frame of reference.

Brief description of the drawings

Example embodiments of the invention will now be described in more detail with reference to the accompanying drawings.

Figure 1, showing, schematically, components of a hybrid tracker system according to the present disclosure.

Figure 2 illustrates a hybrid tracker system according to some examples.

Figure 3 illustrates a method according to some examples.

Figure 4 illustrates a tracker system according to some examples.

Detailed description

Example embodiments of the present invention will be described in the context of an extension to the position tracking functionality of a known hybrid helmet tracker system, for example a hybrid tracker system as described in a patent application by the present Applicant published as WO 2017/042578 A1, for use in an aircraft. In that example, a helmet tracker system comprises an optical helmet tracking component operable in combination with an inertial helmet tracking component. However, although the method is described with reference to a helmet on an aircraft, that it may be applied to track any object within a region of operation. The region of operation may be stationary or moving relative to an inertial reference frame associated with the Earth. The region of operation may also be referred to as a platform. The platform may comprise a vehicle, such as an aircraft. Alternatively, the platform may comprise a simulator. The object may comprise a helmet, a head mounted display, head worn display or any other suitable object where it is desirable to track the positon and orientation of the object.

In this particular example of a hybrid helmet tracker, the inertial tracking component may be configured as the principle source of data for determining changes in orientation of the helmet. The inertial tracking component may comprise an arrangement of miniature inertial sensors attached to the helmet for sensing a rate of change in orientation of the helmet. A tracker processor is configured to calculate orientation of the helmet based upon rate data output by the inertial sensors. The tracker processor is also configured to apply corrections to the rate data sensed by the inertial sensors using rate data output by the optical tracker component to correct for changing response (drift) of the inertial sensors or any misalignment of the inertial sensors.

The optical tracker component is configured both to sense changes in orientation of the helmet, for example for the purposes of providing corrections in the inertial tracker component, and to determine the position of the helmet within a region of operation, e.g. within the aircraft cockpit. The optical helmet tracking component may comprise an arrangement of controllable emitters integrated within an outer shell of a helmet and at least one camera mounted at a fixed, known position within an aircraft cockpit. The camera position is chosen so that it may have a direct line of sight to at least some of the helmet emitters, typically to any group of at least four emitters, in normal use. An optical tracker processor is configured to control the illumination of the emitters and to process image data output by the camera, thereby to sense movement of the helmet, as will now be described in more detail.

The positions of the emitters in a helmet frame of reference, and hence their relative positions on the helmet, are known from initial manufacture or configuration of the helmet. The position of the camera in an aircraft frame of reference is also known for any particular application of the tracker system. It is also expected that the orientation of the aircraft in an inertial reference frame associated with the Earth is also known from aircraft sensors.

The optical tracker component, in one known example, operates cyclically to determine position and orientation of the helmet in the aircraft frame of reference, typically up to 200 times per second. During each cycle, the emitters are activated. If an emitter is visible within a particular captured image, then the identity of the emitter is known using suitable methods and hence its position in the helmet frame of reference is known.

The position of the emitter in the respective captured image, after correcting for the optical properties of a lens of the camera, indicates the direction of a line of sight from the emitter to the fixed camera in the aircraft frame of reference. The relative positions of emitters appearing in an image during a given cycle, the known relative positions of the identified emitters in the helmet frame of reference and the respective lines of sight from the camera to each emitter enables the position and orientation of the helmet to be calculated in the aircraft frame of reference if four emitters are visible in images captured by the camera. If only three emitters are visible to the camera then this yields six equations, two for each emitter imaged by the camera, with six unknowns, three unknowns for the position and three unknowns for orientation. Thus, if only three emitters are visible to the camera, then it is possible for the optical tracking component to determine the position and orientation of the helmet in particular circumstances, but not in general. If only two emitters are visible this yields four equations and thus it is not possible to determine the position and orientation of a helmet using the optical tracking component alone.

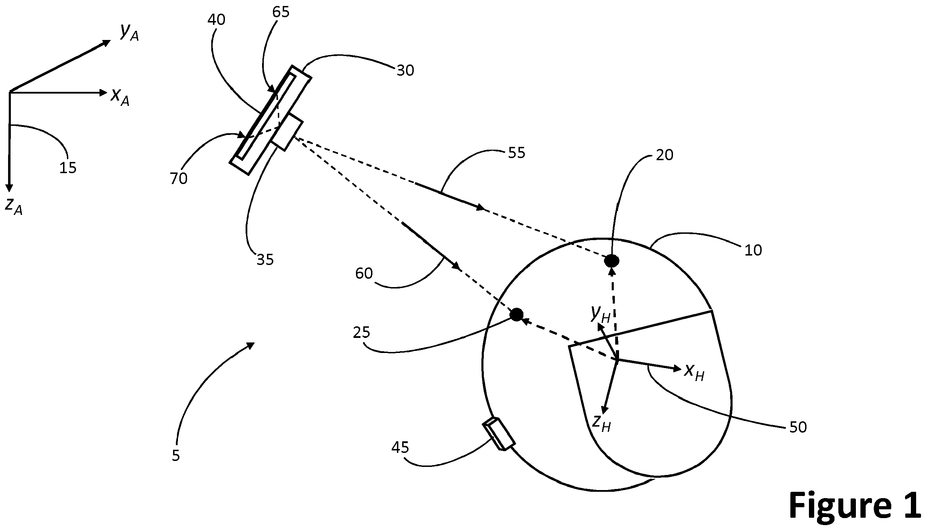

In an example to be described with reference to Figure 1, a hybrid tracker system, as defined above, may be configured to determine the position of a helmet in the aircraft frame of reference when only two emitters of the optical tracker component are visible to the camera during any given cycle. In a conventional hybrid tracker, if only two emitters are visible in the optical tracking component, the hybrid tracker operates only as an inertial tracker determining orientation of the helmet only, until such time as more emitters become visible to the camera.

Referring to Figure 1, a schematic representation is shown of sensor components in an example hybrid helmet tracker system 5 as may be used to track the position and orientation of a helmet 10 in an aircraft frame of reference 15. The aircraft frame of reference 15 will be referred to hereafter as 'aircraft axes' 15. The hybrid helmet tracker system 5 comprises sensors of an optical helmet tracking component and sensors of an inertial helmet tracking component.

For the optical helmet tracking component, the helmet 10 is provided with at least four emitters mounted within an outer shell of the helmet 10, including a first emitter 20 and a second emitter 25. The emitters may be illuminated as discussed above, under the control of an optical tracking processor (not shown in Figure 1). The position of each emitter 20, 25 is defined in a helmet frame of reference 50, to be referred to hereafter as 'helmet axes' 50. The optical tracking component also comprises a camera 30 mounted at a known fixed position and orientation relative to the aircraft axes 15, directed towards the helmet 10. It is intended that the camera 30 is orientated to capture images of different combinations of illuminated emitters mounted on the helmet 10 as the helmet 10 moves and to supply image data of the captured images to the optical tracking processor. The camera 30 comprises a lens 35 and an image sensor 40.

For the inertial tracking component, an inertial sensor block 45 is mounted on or within the helmet 10. In one example, the inertial sensor block 45 comprises three orthogonally-oriented Micro-Electromechanical System (MEMS) gyroscopic sensors. The inertial sensors 45 are able to sense a rate of change in orientation of the helmet 10 in three dimensions in an inertial reference frame associated with the Earth, to be referred to hereafter as 'Earth axes' (not shown in Figure 1). The rate of change data output by the inertial sensors 45 are received and processed by a tracker system processor (not shown in Figure 1) to determine the orientation of the helmet 10 in Earth axes.

Sensors provided on the aircraft, typically as part of an aircraft navigation system, are able to provide data defining the orientation of the aircraft in Earth axes. The orientation of the helmet 10 in Earth axes, as calculated by the tracker system processor from rate data output by the inertial sensors 45, may therefore be transformed using orientation data from the navigation system by a straightforward transformation into an orientation of the helmet 10 in the aircraft axes 15.

The position of the helmet 10 in the aircraft axes 15 is calculated by the optical tracking processor of the hybrid tracker system 5, but to determine helmet position using the optical tracking processor usually requires four of the helmet-mounted emitters to be visible to the camera 30.

In this example, it is assumed that only the first emitter 20 and the second emitter 25 are visible to the camera 30. If the first emitter 20 appears illuminated in a respective image captured by the camera's image sensor 40, the position 65 in the image at which the emission from the emitter 20 is received at the image sensor 40 defines a first line of sight in aircraft axes 15 to the emitter 20 from the lens 35 of the camera 30. The position of the emitter 20 in the aircraft axes 15 lies an unknown distance along that first line of sight. The position of the emitter 20 is therefore defined mathematically in terms of a known line of sight vector 55 in aircraft axes, defining the direction of the defined line of sight from camera lens 35 to the first emitter 20, and an unknown distance from the camera lens 35 to the first emitter 20. It may be convenient to consider the unknown distance as a distance from the image sensor 40 to the emitter 20, having adjusted for the optical properties of the camera lens 35. The line of sight vector may be a unit vector (or a normalised vector), and may be multiplied by a scaling factor determined from the unknown distance from the camera lens 35 to the first emitter 20.

The orientation of the helmet 10 and the helmet axes 50 in aircraft axes 15 are known from the inertial tracking component. Furthermore, the position of the first emitter 20 in the helmet axes 50 is also known. The unknown position of the helmet 10 (origin of the helmet axes 50) in aircraft axes 15 may therefore be related mathematically by:

$$V_c^A + K_{e1} \times \hat{V}_{ce1}^A = [HA] \times V_{e1}^H + V_h^A \qquad \text{eq 1}$$

Where:

$V_c^A$ is the known position of the camera lens 35 or image sensor 40 in aircraft axes 15;

$K_{e1}$ is the unknown distance from the camera lens 35 or image sensor 40 to the first emitter 20;

$\hat{V}_{ce1}^A$ is the known line of sight vector 55 in aircraft axes 15;

*[HA]* is a rotation matrix representing the known orientation of the helmet 10 in aircraft axes 15, as generated from the inertial block 45;

$V_{e1}^H$ is the known position of the first emitter 20 in the helmet axes 50; and

$V_h^A$ is the unknown position of the helmet 10 relative to the camera in the aircraft axes 15.

The above formula generates two independent equations (one equation for each x and y coordinate measurement on the camera image sensor 40 plane representing the line of sight 55): with four unknown quantities the three coordinates of the helmet 10 in aircraft axes 15 and the distance from the camera lens 35 or the image sensor 40 to the first emitter 20.

Consider the second emitter 25 also appearing in the image frame captured by the camera 30, the position 70 at which the light from the illuminated second emitter 25 is received at the image sensor 40 defines a second line of sight in aircraft axes 15 from the lens 35 of the camera 30 or the image sensor 40 to the emitter 25. The position of the emitter 25 in the aircraft axes 15 lies an unknown distance along that second line of sight, in a direction defined by a second line of sight vector 60. As for the first emitter 20, the unknown coordinates of the helmet 10 (origin of the helmet axes 50) in aircraft axes 15 may therefore be related mathematically by:

$$V_c^A + K_{e2} \times \hat{V}_{ce2}^A = [HA] \times V_{e2}^H + V_h^A \qquad \text{eq 2}$$

Where:

$K_{e2}$ is the unknown distance from the camera lens 35 or image sensor 40 to the second emitter 25;

$\hat{V}_{ce2}^A$ is known line of sight vector 60 in aircraft axes.

Noting that $K_{e1}$ and $K_{e2}$ and the position of the helmet 10 in aircraft axes 15 are not independent and are related by equations 3 and 4, this leads to four equations and three independent unknown quantities: the three coordinates of the helmet 10 in aircraft axes 15.

$$K_{e1} = \left| ([HA] \times V_{e1}^H) + V_h^A - V_c^A \right| \qquad \text{eq 3}$$

$$K_{e2} = \left| ([HA] \times V_{e2}^H) + V_h^A - V_c^A \right| \qquad \text{eq 4}$$

Where:

$|v|$ is the magnitude of vector *v*.

The above equations (eq 1-4) can be solved by geometry, and hence $V_h^A$, the unknown position of the helmet 10 in the aircraft axes 15 can be determined, as follows:

$$A_{e1ce2} = \cos^{-1}\left(\widehat{V}_{ce1}^A \cdot \widehat{V}_{ce2}^A\right)$$

$$V_{e1e2}^A = [HA] \times \left(V_{e2}^H - V_{e1}^H\right)$$

$$\widehat{V}_{e1e2}^A = \frac{V_{e1e2}^A}{|V_{e1e2}^A|}$$

$$A_{ce2e1} = \cos^{-1}\left(\widehat{V}_{ce2}^A \cdot \widehat{V}_{e1e2}^A\right)$$

$$K_{e1} = \frac{|V_{e1e2}^A| \times \sin(A_{ce2e1})}{\sin(A_{e1ce2})}$$

$$V_h^A = V_c^A + \left(K_{e1} \times \widehat{V}_{ce1}^A\right) - \left([HA] \times V_{e1}^H\right) \qquad \text{eq 5}$$

By the technique described above, in the event that only two emitters are visible to the camera 30, full hybrid tracking operation may continue, determining both position and orientation of the helmet 10, with benefits of greater tracking accuracy than may typically be achieved by an inertial tracking component operating alone.

The technique described above with reference to Figure 1 makes use of emitters fixed to the helmet frame of reference and a camera fixed to the aircraft axes 15. However, it is not necessary to use a camera and emitter. Any suitable arrangement to determine the line of sight vectors may be used. For example a positon sensor may be used in the place of the camera. The emitter may also be a passive device, such that it may reflect light from an external source that may be detected by the position sensor.

As an alternative to fixing a camera to the aircraft axes 15 and emitters to the helmet axes 50 the camera may be fixed to the helmet and the emitters to the aircraft axes 15.

The technique described above with reference to Figure 1 describes a helmet on an aircraft. However, any object on any platform may be tracked using the same method. For example a head worn display, head mounted display, or any other type of display may be tracked on a platform. The platform may be stationary relative to the earth axes, or moving relative to the earth axes. The platform may comprise a simulator or a vehicle. The vehicle may comprise a motor vehicle, an aircraft or a naval vessel or maritime vessel.

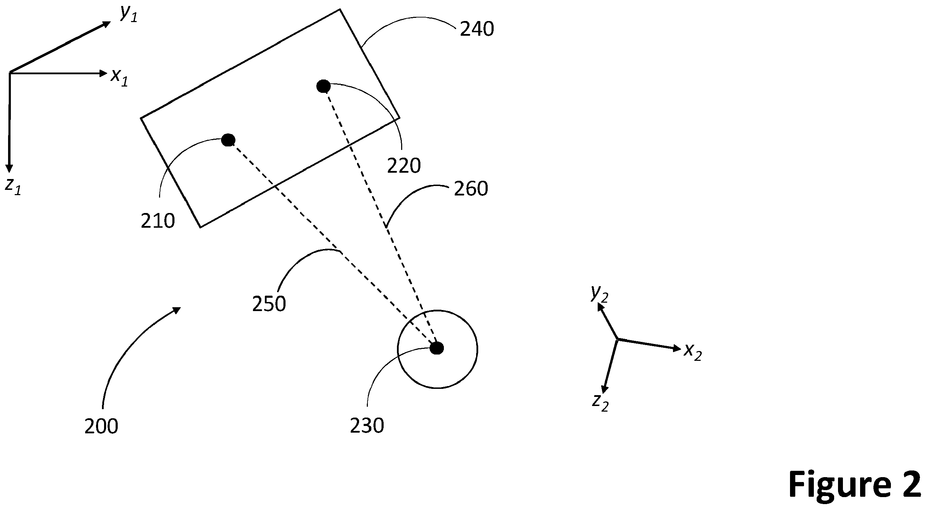

A more general example is described with relation to Figure 2. Figure 2 comprises a region of interest 200. A first point 210, a second point 220 and a third point 230 are located in the region of interest 200. The region of interest is the region in which the object may be tracked. The first point 210 and the second point 220 are fixed in location relative to a first frame of reference 240, such that the first point 210 and the second point 220 move with the first frame of reference. The relative positon of the first point 210 and the second point 220 is fixed.

Sensing means may be used to determine a first line of sight vector 250 from the third point 230 to the first point 210. Sensing means may be used to determine a second line of sight vector 260 from the third point 230 to the first point 260. The line of sight vectors 250 and 260 may be unit vectors (or normalised vectors), and as such define a direction from the third point 230 to the first point 210 and the second point 220. This is because the distance between the third point 230 and the first point 210 (and the second point 220) is unknown.

The sensing means may be associated with the third point 230. In some examples the sensing means may comprise a sensor located at the third point 230 configured to determine the direction from the third point 230 to the first point 210 and the second point 220. In some examples the sensor may comprise a camera.

The second line of sight vector 250 is related to the first line of sight vector 260 based on equations 1 and 2. The first point 210 and second point 220 are fixed in position relative to each other.

The position of each of the first point 210 and the second point 220 relative to each other in a second frame of reference may be determined. The orientation of the first frame of reference 240 in the second frame of reference 240 is known.

The first frame of reference 240 may be fixed in the object frame of reference, such that the first point 210 and the second point are fixed in position relative to the object, as described in relation to Figure 1. If the first frame of reference 240 is fixed in the object frame of reference then the second frame of reference may be fixed relative to the frame of reference of the region of interest 200, i.e. a platform frame of reference. This is consistent with some examples where a camera or sensing means is in a fixed location in the region of interest 200 and the first point 210 and the second points are fixed on the object (such as a helmet).

In contrast to Figure 1, the first frame of reference 240 may be fixed in the in the region of interest 200 frame of reference, i.e. a platform frame of reference. Such that the first point 210 and the second point are fixed in position relative to the region of interest 200. If the first frame of reference 240 is fixed in the region of interest 200 frame of reference then the second frame of reference may be fixed relative to the object frame of reference. This is consistent with some examples where a camera or sensing means is in a fixed location on the object and the first point 210 and the second points are fixed in the region of interest.

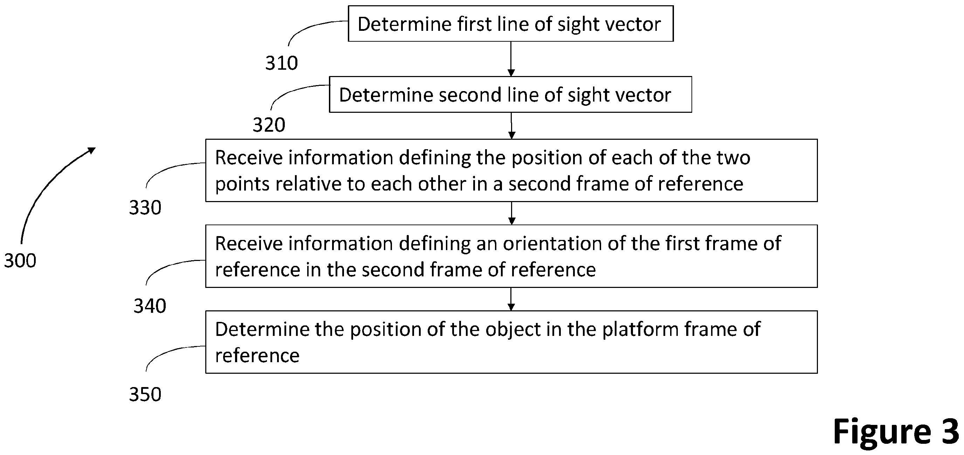

Figure 3 illustrates a method to determine a position of an object, the method is indicated by the reference sign 300.

The first line of sight vector is determined 310. The second line of sight vector is determined. The second line of sight vector is related to the first line of sight vector as the first point and second point are fixed in position relative to each other.

Information defining the position of each of the two points relative to each other in a first frame of reference is received 330. This information is known as the two points are fixed relative to each other.

Information defining an orientation of the first frame of reference in the second frame of reference is received 340. This orientation may be determined by an inertial tracker.

Using the first and second line of sight vectors defined at 310 and 320, the information received at 330, the information received at 340 and the calculated first and second distances from the third point to the first and second points, the position of the object in the platform frame of reference may be determined 350.

The second frame of reference may be fixed in the platform frame of reference and the first frame of reference may be fixed in an object frame of reference, or the first frame of reference may be fixed in the platform frame of reference and the second frame of reference may be fixed in the object frame of reference.

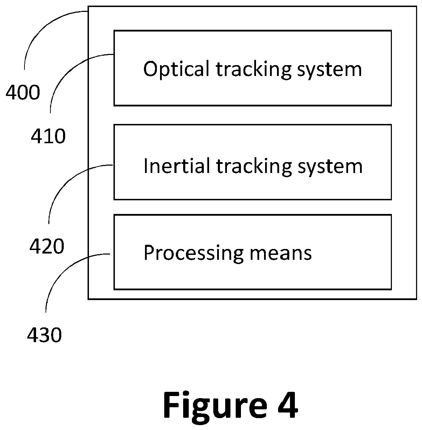

Figure 4 illustrates a hybrid tracker system 400 in accordance with some examples. Hybrid tracker system 400 comprises an optical tracking system 410, an inertial tracking system 420 and a processing means 430. Hybrid tracker system may be suitable to work with the techniques described with relation to Figures 1-3.

It will be understood that processing components described above with reference to Figures 1-4 may in practice be implemented by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium; optical memory devices in general; etc. The examples described herein are to be understood as illustrative examples of embodiments of the invention. Any methods described are not limited to the order in which they are described, and the steps of the method may happen in any order. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, variations and modifications not described herein, as would be apparent to a person of ordinary skill in the relevant art, may also be employed within the scope of the invention, which is defined in the claims.

## Claims

1. A method for determining a position of an object in a platform frame of reference, comprising:

(i) determining a first line of sight vector and a second line of sight vector in the first frame of reference from a third point to the first and second points, wherein the second line of sight vector is related to the first line of sight vector according to the determined position of the second point relative to the determined position of the first point, the first point and second point are fixed in position relative to each other;

(ii) receiving information defining the position of each of the two points relative to each other in a second frame of reference;

(iii) receiving information defining an orientation of the first frame in the first frame of reference;

(iv) using the first and second line of sight vectors defined at (i), the information received at (ii), the information received at (iii) and the first and second distances from the third point to the first and second points, thereby to determine the position of the object in the platform frame of reference; and wherein

the first frame of reference is fixed in the platform frame of reference and the second frame of reference is fixed in an object frame of reference, or the second frame of reference is fixed in the platform frame of reference and the first frame of reference is fixed in the object frame of reference.

2. The method according to claim 1, wherein (iv) comprises defining four independent equations having four independent unknown quantities, the independent unknown quantities comprising the three coordinates of the object in the first frame of reference and the distance to the first point from the third point.

3. The method according to claim 1, wherein (iv) comprises defining four independent equations having four independent unknown quantities, the independent unknown quantities comprising the three coordinates of the object in the second frame of reference and the distance to the first point from the third point.

4. The method according to any preceding claim, wherein determining a position of a first and second point in the first frame of reference comprises detecting a first and second sensor at the first and second point respectively using a third sensor.

5. The method according to claim 4, wherein the first and second sensors are passive sensors.

6. The method according to claim 4, wherein the first and second sensors are active sensors.

7. The method according to claim 6, wherein the first and second sensors comprise light emitting diodes.

8. The method according to claim 5, wherein the first and second sensors comprise reflectors configured to reflect light towards the third sensor.

9. The method according to any of claims 4-8, wherein the third sensor comprises a camera configured to record an image of the first and second points.

10. The method according to claim 9, wherein the camera is configured to record an image.

11. The method according to claim 10, wherein the first point is visible in a first image captured by the camera at a first time and the second point is visible in a second image captured by the camera at a second time and the time interval between the first time and the second time is sufficiently short for the object to be assumed stationary during the time interval.

12. A computer-readable medium comprising instructions, that cause a processing means to perform the method of any of claims 1-11.

13. A tracker system, comprising an optical tracker component and an inertial tracker component, wherein the inertial tracker component is configured to determine an orientation of an object in a platform frame of reference and the optical tracker component comprises:

an optical tracker processor, configured:

(i) to determine the position of a first and second point in a first frame of reference, the determined positions defining first and second line of sight vectors in the first frame of reference from a third point to the first and second points, wherein the second line of sight vector is related to the first line of sight vector according to the determined position of the second point relative to the determined position of the first point, the first point and second point are fixed in position relative to each other;

(ii) to receive information defining the position of each of the two points relative to each other in a second frame of reference;

(iii) to receive information defining an orientation of the first frame of reference in the second frame of reference;

(iv) to use the first and second line of sight vectors defined at (i), the information received at (ii), the information received at (iii) and the first and second distances from the third point to the first and second points, thereby to determine the position of the object in the platform frame of reference; and wherein

the first frame of reference is fixed in the platform frame of reference and the second frame of reference is fixed in an object frame of reference, or the second frame of reference is fixed in the platform frame of reference and the first frame of reference is fixed in the object frame of reference.

**14.** A tracker system configured to perform the method of any of claims 1-11.

**15.** A head worn display comprising a tracker system according to any of claims 13 or 14.

Figure 1

EP 4 001 952 A1

**Figure 2**

```
                              ┌─────────────────────────────────────┐
                         ┌────┤  Determine first line of sight vector│
                         │    └─────────────────────────────────────┘
                        310                        │
                                                   ▼
                              ┌─────────────────────────────────────┐
                         ┌────┤ Determine second line of sight vector│
                         │    └─────────────────────────────────────┘
                        320                        │
                                                   ▼
                              ┌───────────────────────────────────────────────────┐
                         ┌────┤ Receive information defining the position of each of the two
                         │    │ points relative to each other in a second frame of reference
            300         330   └───────────────────────────────────────────────────┘
                                                   │
                                                   ▼
                              ┌───────────────────────────────────────────────────┐
                         ┌────┤ Receive information defining an orientation of the first frame of
                         │    │ reference in the second frame of reference
                        340   └───────────────────────────────────────────────────┘
                                                   │
                                                   ▼
                              ┌───────────────────────────────────────────────────┐
                         ┌────┤ Determine the position of the object in the platform frame of
                         │    │ reference
                        350   └───────────────────────────────────────────────────┘
```

**Figure 3**

400

410

| Optical tracking system |

420

| Inertial tracking system |

430

| Processing means |

# Figure 4

Europäisches
Patentamt

European
Patent Office

Office européen
des brevets

## EUROPEAN SEARCH REPORT

Application Number

EP 20 27 5170

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RU 2 720 076 C1 (ROSSIJSKAYA FEDERATSIYA OT IMENI KOTOROJ VYSTUPAET MINI OBORONY ROSSIJ) 23 April 2020 (2020-04-23) * page 7, line 25 - page 13, line 10 * * figures 1-6 * * abstract * | 1-15 | INV. G01S5/16 |
| A | US 5 227 985 A (DEMENTHON DANIEL F [US]) 13 July 1993 (1993-07-13) * column 8, line 38 - column 10, line 66 * * figures 1-3 * * abstract * | 1-15 | |
| A | US 2011/079703 A1 (GUNNING III WILLIAM J [US] ET AL) 7 April 2011 (2011-04-07) * page 2, paragraph 24 - page 4, paragraph 44 * * figures 1-5 * * abstract * | 1-15 | |
| A | US 5 085 507 A (WILLIAMS RODNEY D [US] ET AL) 4 February 1992 (1992-02-04) * column 2, line 44 - column 4, line 60 * * figures 1-2C * * abstract * | 1-15 | TECHNICAL FIELDS SEARCHED (IPC)  G01S |

The present search report has been drawn up for all claims

| Place of search | Date of completion of the search | Examiner |
|---|---|---|
| Munich | 4 May 2021 | von Walter, Sven-Uwe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 27 5170

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2021

| Patent document cited in search report | | Publication date | Patent family member(s) | Publication date |
|---|---|---|---|---|
| RU 2720076 | C1 | 23-04-2020 | ------------------------------ | |
| US 5227985 | A | 13-07-1993 | NONE | |
| US 2011079703 | A1 | 07-04-2011 | NONE | |
| US 5085507 | A | 04-02-1992 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017042578 A1